(19) Europäisches Patentamt
European Patent Office
Office européen des brevets

(11) **EP 2 041 529 B1**

(12) **EUROPÄISCHE PATENTSCHRIFT**

(45) Veröffentlichungstag und Bekanntmachung des Hinweises auf die Patenterteilung:
**27.04.2011 Patentblatt 2011/17**

(21) Anmeldenummer: 07765424.2

(22) Anmeldetag: **14.06.2007**

(51) Int Cl.:
*G01F 23/296* (2006.01) *G01N 9/00* (2006.01)

(86) Internationale Anmeldenummer:
**PCT/EP2007/055907**

(87) Internationale Veröffentlichungsnummer:
**WO 2008/009522 (24.01.2008 Gazette 2008/04)**

(54) **VORRICHTUNG ZUR BESTIMMUNG UND/ODER ÜBERWACHUNG EINER PROZESSGRÖßE EINES MEDIUMS**

SYTEM FOR DETERMINING AND/OR MONITORING A PROCESS QUANTITY OF A MEDIUM

DISPOSITIF POUR DÉTERMINER ET/OU SURVEILLER UNE VARIABLE DE PROCESSUS D'UN MILIEU

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **19.07.2006 DE 102006033819**

(43) Veröffentlichungstag der Anmeldung:
**01.04.2009 Patentblatt 2009/14**

(73) Patentinhaber: **Endress+Hauser GmbH+Co. KG 79689 Maulburg (DE)**

(72) Erfinder:
• **LOPATIN, Sergej**
  **79540 Lörrach (DE)**
• **MÜLLER, Alexander**
  **79361 Sasbach-Jechtingen (DE)**
• **D'ANGELICO, Sascha**
  **79595 Rümmingen (DE)**
• **URBAN, Martin**
  **79669 Zell i. W. (DE)**
• **HERWIK, Stanislaw**
  **79618 Rheinfelden (DE)**

(74) Vertreter: **Andres, Angelika Maria et al Endress+Hauser (Deutschland) AG+Co. KG PatServe Colmarer Strasse 6 79576 Weil am Rhein (DE)**

(56) Entgegenhaltungen:
**EP-A1- 0 985 916    DE-A1- 10 057 974**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 041 529 B1

**Beschreibung**

Die Erfindung bezieht sich auf eine Vorrichtung zur Bestimmung und/oder Überwachung mindestens einer Prozessgröße, insbesondere der Dichte r eines Mediums, mit mindestens einer mechanisch schwingfähigen Einheit, mit mindestens einer Anrege-/Empfangseinheit, welche die mechanisch schwingfähige Einheit zu mechanischen Schwingungen anregt und welche die mechanischen Schwingungen der mechanisch schwingfähigen Einheit empfängt, und mit mindestens einer Elektronikeinheit, welche die Anrege-/Empfangseinheit mit einem elektrischen Anregesignal USA beaufschlagt, und welche von der Anrege-/Empfangseinheit ein elektrisches Empfangssignal $S_E$ erhält. Bei dem Medium handelt es sich beispielsweise um eine Flüssigkeit. Das Medium befindet sich beispielsweise in einem Behälter oder es durchströmt ein Rohr. Die Prozessgröße ist in einer Ausgestaltung die Dichte des Mediums.

Im Stand der Technik sind Messgeräte bekannt, welche sog. Schwinggabeln aufweisen. Diese Schwinggabeln werden in Schwingungen versetzt, und die von dem Kontakt mit dem Medium und auch von Mediumseigenschaften abhängigen Schwingungen werden empfangen und ausgewertet. Die Schwingungen, d.h. die Größen wie Frequenz oder Amplitude sind abhängig vom Füllstand, d.h. vom Grad der Bedeckung der Schwinggabel durch das Medium, aber auch von der Dichte oder der Viskosität des Mediums. Die zweifache Abhängigkeit der Schwingungen von Dichte und Viskosität des Mediums macht eine Überwachung der Dichte entsprechen schwierig.

Die Offenlegungsschrift DE 100 57 974 A1 beschreibt eine solche Schwinggabel und bezieht sich insbesondere auf die Unterdrückung der Abhängigkeit der Schwingungen von der Viskosität des Mediums. Die Auswirkungen der Viskosität lassen sich gemäß der Offenlegungsschrift derartig vermindern, dass zwischen dem Erregersignal und dem Empfangssignal eine Phase unterschiedlich zu 90°, bei flüssigen Medien insbesondere von 70° eingestellt wird. Durch eine solche Phase wird die Auswirkung der Viskosität weitgehend kompensiert.

Um eine Phasendifferenz zu finden, bei welcher Viskositätsänderungen keine Auswirkungen auf die Frequenz der Schwingungen haben, lassen sich beispielsweise von unterschiedlichen Medien Kurven aufnehmen, welche den Verlauf der Phasendifferenz zwischen Sende- und Empfangssignal in Abhängigkeit von der Frequenz des Sendesignals wiedergeben. Der Schnittpunkt der Kurven ergibt dann die gesuchte Phasendifferenz. Dies ist beispielsweise in der EP 0 985 916 A1 der Anmelderin beschirieben.

Die Aufgabe der Erfindung besteht darin, ein Messgerät zur Messung einer Prozessgröße, insbesondere der Dichte anzugeben, welches reproduzierbare Messungen erlaubt.

Die Aufgabe löst die Erfindung dadurch, dass die Elektronikeinheit derartig ausgestaltet ist, dass die Elektronikeinheit das Anregesignal ($S_A$) derartig erzeugt, dass sich zwischen dem Empfangssignal ($S_E$) und dem Anregesignal ($S_A$) eine Phasendifferenz (Df) ergibt, welche im Wesentlichen gleich einem vorgebbaren Phasendifferenzsollwert (Df $_{soll}$) ist, dass der Phasendifferenzsollwert (Df $_{soll}$) derartig vorgegeben ist, dass bei dem Phasendifferenzsollwert (Df $_{soll}$) Auswirkungen von Änderungen der Viskosität des Mediums auf die mechanischen Schwingungen der mechanisch schwingfähigen Einheit im Wesentlichen vernachlässigbar sind, und dass der Phasendifferenzsollwert (Df $_{soll}$) mindestens in Abhängigkeit vom Verhältnis der Impedanz der Anrege-/Empfangseinheit zur Eingangsimpedanz der Elektronikeinheit vorgegeben ist, wobei die Eingangsimpedanz sich auf den Eingang bezieht, über welchen die Elektronikeinheit das Empfangssignal ($S_E$) empfängt.

Bei der Anrege-/Empfangseinheit handelt es sich in einer Ausgestaltung um ein piezo-elektrisches Element, welches das Anregesignal ($S_A$), bei welchem es sich um eine elektrische Wechselspannung handelt, in mechanische Schwingungen umsetzt. Diese Schwingungen werden beispielsweise über eine Membran auf die mechanisch schwingfähigen Einheit, also z.B. auf eine sog. Schwinggabel mit zwei Gabelzinken übertragen. Die mechanischen Schwingungen, welche durch den Kontakt mit dem Medium bzw. durch dessen Eigenschaften beeinflusst werden, werden von der Anrege-/Empfangseinheit wiederum in ein elektrisches Empfangssignal ($S_E$) umgewandelt, welches mindestens die Frequenz ($F_0$) der mechanischen Schwingungen der mechanisch schwingfähigen Einheit trägt.

Für die Messung der Dichte (r) ist es insbesondere richtig, dass die Abhängigkeit von einer Viskositätsänderung kompensiert wird. Die Viskosität stellt eine Dämpfung der Schwingungen dar. Aus der Theorie ist bekannt, dass eine Unabhängigkeit von der Dämpfung gegeben ist, wenn zwischen dem Anrege- und dem Empfangssignal eine Phase von +90° vorliegt. Wie jedoch beispielsweise der Offenlegungsschrift DE 100 57 974 A1 zu entnahmen, kann dieser Effekt in realen Systemen bei Werten unterschiedlich zu 90° auftreten. Der Erfindung liegt nun die Erkenntnis zugrunde, dass die Phase für die Viskositätsunabhängigkeit zumindest vom Verhältnis zwischen der Impedanz der Anrege-/Empfangseinheit und der Eingangsimpedanz der Elektronikeinheit abhängt. Daher werden erfindungsgemäß bezogen auf die jeweilige Dimensionierung des Messgerätes die Impedanz der Anrege-/Empfangseinheit und die Eingangsimpedanz der Elektronikeinheit - dies hängt auch vom Typ der Elektronikeinheit ab - gemessen bzw. es wird der aus der Ausgestaltung der Messvorrichtung resultierende Phasenwinkel berücksichtigt, und es wird der entsprechende Phasenwinkel eingestellt, um die Unabhängigkeit von Viskositätsänderungen zu erreichen. In einer Ausgestaltung, welche sich auf eine bestimmte Anordnung des Messgerätes bezieht, beträgt die Phase, welche das Empfangssignal gegenüber dem Anregesignal aufweist, +46°. Ist die Eingangsimpedanz sehr hochohmig, d.h. ist sie zumindest eine Größenordnung oder den Faktor 10 größer als die Impedanz der Anrege-/Empfangseinheit, so ist die Phase bei Viskositätsunabhängigkeit +42°. Eine hohe Eingangsimpedanz ist beispielsweise bei Spannungsverstärkern gegeben. Ist die Eingangsimpedanz sehr klein, d.h. um mindestens eine Größenordnung kleiner als die Impedanz der Anrege-/Empfangseinheit, so beträgt die Phasendifferenz -48°. Eine kleine Eingangsimpedanz liegt beispielsweise bei Ladungsverstärkern vor. Die Phase des Empfangssignals relativ zum Anregesignal beträgt also je nach Ausgestaltung der Elektronikeinheit +46°, +42° oder -48°. Der Betrag der Phase liegt also vorzugsweise im Bereich zwischen 40° und 50°. Dies ist somit eine deutliche Abweichung zum theoretischen Wert von 90°:

Damit diese Phasenwerte erhalten werden, muss die Elektronikeinheit das Anregesignal derart erzeugen, dass sich in Summe über alle Phasen der Wert 0° bzw. n * 360° (n = 1, 2, 3...) ergibt, da es sich insgesamt um einen Schwingkreis handelt. D.h. der Phasendifferenzsollwert (Df$_{soll}$) beträgt in Abhängigkeit vom Verhältnis Eingangsimpedanz zur Impedanz der Anrege-/Empfangseinheit -46°, -42° oder +48°. Für die Auswertung des Empfangssignals hin auf die Ermittlung der Dichte des Mediums ist vorteilhafterweise mindestens eine Auswerteeinheit vorgesehen, welche aus der Frequenz des Empfangssignals (S$_E$) mindestens die Dichte (r) des Mediums ermittelt. Diese Auswerteeinheit ist dabei ein Bestandteil des Messgerätes oder es handelt sich um eine externe Einheit.

Eine Ausgestaltung beinhaltet, dass der Phasendifferenzsollwert (Df$_{soll}$) mindestens in Abhängigkeit vom Verhältnis der Impedanz der Anrege-/Empfangseinheit zur Eingangsimpedanz der Elektronikeinheit und in Abhängigkeit von der Ausgangsimpedanz der Elektronikeinheit vorgegeben ist, wobei die Ausgangsimpedanz sich auf den Ausgang bezieht, über welchen die Elektronikeinheit das Anregesignal (S$_A$) ausgibt. In dieser Ausgestaltung wird somit auch eine weitere Abhängigkeit von der Ausgangsimpedanz der Elektronikeinheit berücksichtigt.

Eine Ausgestaltung sieht vor, dass der Phasendifferenzsollwert (Df$_{soll}$) unterschiedlich zu 90° ist. Insbesondere liegt der Betrag des Phasendifferenzsollwerts (Df$_{soll}$) zwischen 40° und 50°. Der Phasendifferenzsollwert (Df$_{soll}$) ist dabei so bemessen, dass er und der Phasenwert des Sensors, bei welchem die Viskositätsunabhängigkeit gegeben ist, zusammen den Wert n * 360° (n = 0, 1,2...) ergibt. Ist also beispielsweise dieser Phasenwert zwischen dem Anregesignal und Empfangssignal +46°, so ist der Phasendifferenzsollwert (Df$_{soll}$) -46°.

Eine Ausgestaltung beinhaltet, dass der Phasendifferenzsollwert (Df$_{soll}$) in dem Fall, dass die Eingangsimpedanz der Elektronikeinheit, insbesondere um mindestens eine Größenordnung, größer als die Impedanz der Anrege-/Empfangseinheit ist, der Phasendifferenzsollwert (Df$_{soll}$) -42° beträgt. Dies trifft insbesondere bei einer Sensoreinheit auf, welche einen Bimorphantrieb und dessen Gabelzinken kein Coating aufweist.

Eine Ausgestaltung sieht vor, dass der Phasendifferenzsollwert (Df$_{soll}$) in dem Fall, dass die Eingangsimpedanz der Elektronikeinheit, insbesondere um mindestens eine Größenordnung, kleiner als die Impedanz der Anrege-/Empfangseinheit ist, der Phasendifferenzsollwert (Df$_{soll}$) +48° beträgt. Insbesondere sieht eine Ausgestaltung vor, dass der Phasendifferenzsollwert (Df$_{soll}$) -46° ist, so dass der Phasenwert des Empfangssignals (S$_E$) relativ zum Anregesignal (S$_A$) +46° beträgt.

Eine Ausgestaltung beinhaltet, dass die Elektronikeinheit derart ausgestaltet ist, dass die Elektronikeinheit das Anregesignal (S$_A$) derart erzeugt, dass das Anregesignal (S$_A$) im Wesentlichen ein Sinus-Signal ist. Im Allgemeinen wird zur Anregung ein Rechtecksignal der Einfachheit halber verwendet. Weist die Verstärkung des gesamten Schwingsystems - d.h. die Anordnung aus der mechanisch schwingfähigen Einheit und der Elektronikeinheit - im stationären Fall, d.h. wenn sich Dämpfung, Verstärkung und Amplitude nicht mehr ändern, weil sich beispielsweise der Füllstand des Mediums, mit welchem die schwingfähige Einheit wechselwirkt, nicht mehr ändert, einen Wert von Eins auf, so ergibt sich ein Sinus. In den meisten Messgeräten wird eine Verstärkung größer Eins verwendet, so dass sich ein Rechtecksignal ergibt. Für die Dichtemessung wird jedoch in dieser Ausgestaltung ein Wert von Eins verwendet. Ein Vorteil der Sinus-Anregung besteht gerade darin, dass keine Obertöne angeregt werden, und dass die Schwingungsenergie für nur eine Mode verwendet wird.

Eine Ausgestaltung sieht vor, dass die Auswerteeinheit derart ausgestaltet ist, dass die Auswerteeinheit die Dichte (r) des Mediums im Wesentlichen nach folgender Formel bestimmt:

$$\rho = \frac{1}{K} * \left[ \left( \frac{F_{0.Vak} + C * T}{F_{0.Med}} \right)^2 * (1 + D * P) - 1 \right]$$

,

wobei K ein Koeffizient für die Dichteempfindlichkeit der mechanisch schwingfähigen Einheit ist, wobei F$_{0.Vak}$ die Frequenz der mechanismen Schwingungen der mechanisch schwingfähigen Einheit im Vakuum ist, wobei C ein Koeffizient für die Temperaturempfindlichkeit der mechanisch schwingfähigen Einheit ist, wobei T ein Temperaturwert für das Medium ist, wobei F$_{0.Med}$ die Frequenz (F$_0$) der mechanischen Schwingungen der mechanisch schwingfähigen Einheit im Medium ist, wobei D ein Koeffizient für die Druckempfindlichkeit der mechanisch schwingfähigen Einheit ist, und wobei P ein Druckwert für das Medium ist.

Für die genaue Messung der Dichte muss die Abhängigkeit von Druck und Temperatur berücksichtigt bzw. müssen die entsprechenden Werte gemessen werden. Ist eine Konstanz dieser Größen gegeben oder ist deren Auswirkungen in der Anwendung vernachlässigbar, so lässt sich die Formel auch entsprechend vereinfachen:

$$\rho \approx \frac{1}{K'} * \left[ \left( \frac{F_{0.Vak}}{F_{0.Med}} \right)^2 - 1 \right]$$

,

Eine solche Vereinfachung ist vor allem dann möglich, wenn im Wesentlichen nur eine Änderung der Dichte erkannt werden soll.

Die Dichte lässt sich somit über folgende Schritte messen bzw. überwachen:

Zunächst erfolgt ein Abgleich des Messgerätes:

- die Abhängigkeit der mechanischen Schwingungen der mechanisch schwingfähigen Einheit von der Temperatur T des Mediums wird ermittelt und daraus wird ein Koeffizient C für die Temperaturempfindlichkeit der mechanisch schwingfähigen Einheit ermittelt,
- die Abhängigkeit der mechanischen Schwingungen der mechanisch schwingfähigen Einheit vom Druck P des Mediums wird ermittelt und daraus wird ein Koeffizient D für die Druckempfindlichkeit der mechanisch schwingfähigen Einheit ermittelt,
- die Abhängigkeit der mechanischen Schwingungen der mechanisch schwingfähigen Einheit von der Dichte r des Mediums wird ermittelt und daraus wird ein Koeffizient (K) für die Dichteempfindlidlkeit der mechanisch schwingfähigen Einheit ermittelt,
- die Frequenz der mechanischen Schwingungen der mechanisch schwingfähigen Einheit im Vakuum $F_{0.Vak}$ wird ermittelt,
- ein Phasendifferenzsollwert ($Df_{soll}$) zwischen dem Anregesignal ($S_A$) und dem Empfangssignal ($S_E$) wird ermittelt, bei welchem Auswirkungen von Änderungen der Viskosität auf die mechanischen Schwingungen der mechanisch schwingfähigen Einheit im Wesentlidlen vernachlässigbar sind.

Nach diesem Abgleich werden die ermittelten Werte passend hinterlegt und die eigentlichen Messungen werden durchgerührt:

- die Temperatur T des Mediums wird ermittelt oder es wird ein Wert für die Temperatur T des Mediums wählbar gesetzt, d.h. beispielsweise auch vernachlässigt,
- der Druck P des Mediums wird ermittelt oder es wird ein Wert für den Druck P des Mediums wählbar gesetzt, indem beispielsweise auch der Druck vernachlässigt wird,
- die mechanisch schwingfähigen Einheit wird zu mechanischen Schwingungen angeregt,
- die mechanischen Schwingungen der mechanisch schwingfähigen Einheit werden empfangen und in ein Empfangssignal $S_E$ umgewandelt,
- aus dem Empfangssignal $S_E$ wird die Frequenz $F_{0.Med}$ der mechanischen Schwingungen der mechanisch schwingfähigen Einheit im Medium ermittelt, und
- die Dichte r des Mediums wird über folgende Formel mit den oben ermittelten Konstanten und Werten bestimmt:

$$\rho = \frac{1}{K} * \left[ \left( \frac{F_{0.Vak} + C * T}{F_{0.Med}} \right)^2 * (1 + D * P) - 1 \right]$$

Alternativ wird die verkürzte Formel verwendet und es wird im Wesentlichen eine Änderung der Dichte angezeigt. Die beschriebene Vorgehensweise ist jedoch nur ein Beispiel und lässt sich leicht an weitere Bedingungen anpassen.

Der Phasendifferenzsollwert wird dabei in einer Ausgestaltung mit folgenden Schritten ermittelt:

dass für mindestens zwei Medien mit unterschiedlicher Viskosität die Abhängigkeit zwischen der Frequenz ($F_{0.Med}$) der mechanischen Schwingungen der mechanisch schwingfähigen Einheit im jeweiligen Medium und der Phasendifferenz (Df) zwischen dem Anregesignal ($S_A$) und dem Empfangssignal ($S_E$) ermittelt wird, und dass der Phasenbereich ermittelt wird, innerhalb dessen die Phasendifferenz (Df) der mindestens zwei Medien im Wesentlichen gleich sind. Haben die Medien auch unterschiedliche Dichte, so ist die anschließende Ausgestaltung zu beachten. In einer weiteren Ausgestaltung wird die Phasendifferenz in Abhängigkeit von einem variierbaren Lastwiderstand an der Anrege-/Empfangseinheit, d.h. in Abhängigkeit von unterschiedlichen Eingangsimpedanzen der Elektronikeinheit ermittelt, d.h. so kann die Auswirkung der Eingangsimpedanz auf den festzulegenden Phasenwert ermittelt werden.

In einer Ausgestaltung wird das Verfahren zur Bestimmung des Phasenbereichs dahingehend erweitert, dass die Dichte r der mindestens zwei Medien bestimmt wird, und dass in dem Fall, dass sich die Dichtewerte der mindestens zwei Medien unterscheiden, die Auswirkungen der Dichte r auf die Frequenz $F_{0.Med}$ der Schwingungen ermittelt und kompensiert wird. Im einfachsten Fall wird die Auswirkung der Dichte auf die Messung jeweils herausgerechnet. Diese Ausgestaltung bezieht sich also insbesondere daraus, dass die Dichten der beiden Messmedien unterschiedlich sind, so dass die Auswirkungen der Dichte auf die Schwingungen und insbesondere auf die Schwingungsfrequenz herausgerechnet wird, um die Frequenzänderung zu erhalten, die sich allein durch die Viskositätsänderung ergibt.

Eine Ausgestaltung der erfindungsgemäßen Vorrichtung beinhaltet, dass mindestens ein Temperatursensor zur Bestimmung der Temperatur (T) des Mediums vorgesehen ist, und/oder dass mindestens ein Drucksensor zur Bestimmung des Druckes (P) des Mediums vorgesehen ist. Diese Sensoren erlauben eine genauere Messung der Dichte, da so die Auswirkungen von Dichte und Temperatur berücksichtigt werden können.

Die Erfindung wird anhand der nachfolgende Zeichnung näher erläutert. Es zeigt:

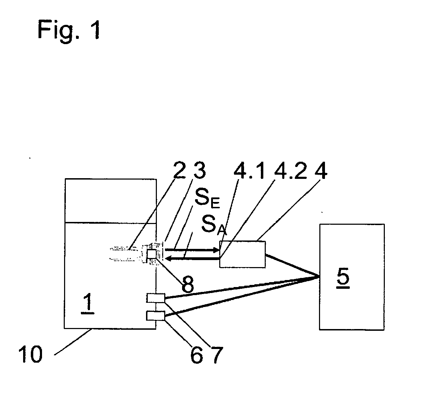

Fig. 1: eine schematische Darstellung einer erfindungsgemäßen Messvorrichtung.

In der Fig. 1 befindet sich ein Medium 1 in einem Behälter 10. An dem Behälter 10 ist die mechanisch schwingfähigen Einheit 2 eines erfindungsgemäßen Messgerätes angebracht. Hierbei handelt es sich um eine sog. Schwinggabel, d.h. zwei Gabelzinken sind an einer Membran angebracht. Hinter der Membran und mechanisch mit ihr gekoppelt befindet sich die Anrege-/Empfangseinheit 3, bei welcher es sich im gezeigten Fall um ein piezo-elektrisches Element handelt. Dieses piezo-elektrische Element 3 wird als Wandler zwischen den mechanischen Schwingungen und den elektrischen Signalen verwendet. Von der Elektronikeinheit 4 wird die Antriebs-/Empfangseinheit 3 mit dem elektrischen Anregesignal $S_A$ beaufschlagt. Diese elektrische Wechselspannung wird in mechanische Schwingungen übertragen, welche die Schwinggabel 2 schwingern lassen. Die Schwingungen der mechanisch schwingfähige Einheit 2 hängen dabei vom Bedeckungsgrad der Gabel durch das Medium 1, aber auch von Eigenschaften des Mediums 1 selbst ab. So sind die Schwingungen auch von der Dichte und der Viskosität des Mediums 1 abhängig. Über diese Abhängigkeit lassen sich umgekehrt die Größen messen, indem das Empfangssignal $S_E$ der Antriebs-/Empfangseinheit 3 passend ausgewertet wird. Das Messgerät ist hier so ausgebildet, dass insbesondere die Dichte des Mediums 1 bestimmt bzw. überwacht wird. Der Füllstand lässt sich jedoch u.a. auch weiterhin messen bzw. überwachen. Es sei auch angemerkt, dass die hier beschriebene Erfindung nicht auf die Anwendung auf Schwinggabeln oder Einstäben beschränkt ist, sondern dass sie sich beispielsweise auch auf Coriolis-Durchflussmessgeräte anwenden lässt. Für die Dichtemessung ist es jedoch erforderlich, dass u.a. die Abhängigkeit der Schwingungen von der Viskosität kompensiert wird. Dies geschieht dadurch, dass das Empfangssignal $S_E$ eine spezielle Phase aufweist, bei welcher Änderungen der Viskosität auf die Schwingfrequenz keine oder nur vernachlässigbare Auswirkungen haben. Damit diese Phase des Empfangssignals $S_E$ erhalten wird und damit die Resonanzbedingung, dass die Summe aller Phasen im Schwingkreis gleich n * 360° mit n = 0, 1, 2, 3... ist, ist die Elektronikeinheit 4 derartig ausgestaltet, dass sie das Anregesignal $S_A$ entsprechen erzeugt. Dabei hat sich ergeben, dass dieser Phasenwert zumindest abhängig davon ist, welches Größenverhältnis zwischen der Impedanz der Antriebs-/Empfangseinheit 3 und der Eingangsimpedanz 4.1 der Elektronikeinheit 4 besteht. Somit ist der Wert auch davon abhängig, welche Struktur die Elektronikeinheit 4 aufweist, d.h. insbesondere um was für einen Verstärkertyp es sich handelt. Der theoretische Wert für die Phase ist 90°. Es zeigt sich jedoch, dass die Phase bei einem sehr hochohmigen Eingang 4.1 gleich 42° und bei einem niederohmigen Eingang 4.1 gleich -48° ist. Entsprechend beträgt der Phasendifferenzsollwert $Df_{soll}$ -42° bzw. +48°. Diese speziellen Werte beziehen sich jedoch auch auf die weitere Ausgestaltung des Messgerätes. Ein Erklärungsmadell für diese Werte ist, dass die Elektronikeinheit 4 bzw. dessen Eingangsimpedanz in Verbindung mit der kapazitiven Eigenschaft der Antriebs-/Empfangseinheit 3, insbesondere in der Ausgestaltung als piezo-elektrisches Element als Hochpass fungiert. Der Phasenwert bzw. der Phasendifferenzsollwert $Df_{soll}$ bzw. ein Wert für die Anrege-/Empfangseinheit 3, aus welchem sich in Verbindung mit der Art der Elektronikeinheit 4 der Phasendifferenzsollwert $Df_{soll}$ ergibt, wird vorzugsweise in einer Speichereinheit 8 abgelegt, so dass die Elektronikeinheit 4 bzw. ein darin befindlicher Mikroprozessor darauf zugreifen kann.

Um die Messungen zu verbessern und die Leistung des Messgerätes zu erhöhen, ist der Schwingkreis aus mechanisch schwingfähiger Einheit 2, Antriebs-/Empfangseinheit 3 und Elektronikeinheit 4 derartig ausgestaltet, dass die Gesamtverstärkung gleich Eins ist. D.h. die Dämpfung der Schwingungen durch das Medium 1 und die Verstärkung der Elektronikeinheit 4 müssen sich gerade gegenseitig kompensieren. Daher ist es auch erforderlich, dass der Verstärkungsfaktor der Elektronikeinheit 4 einstellbar und veränderbar ist. Weiterhin bringt es Vorteile mit sich, dass das Anregesignal $S_A$ ein Sinussignal ist und nicht wie allgemein bei solchen Schwingsystemen üblich ein Rechtecksignal. Insbesondere findet eine Grundwellenanregung statt.

Auf die Schwingungen bestehen weiterhin Auswirkungen von Druck und Temperatur. Sind diese beiden Größen konstant oder sind ihre Variationen nur sehr gering, so kann ihre Auswirkungen auf die Dichte-Messung vernachlässigt werden. Ist jedoch eine möglichst genaue Messung erforderlich, so werden Temperatur T und Druck P durch einen jeweiligen Sensor 6, 7 gemessen. Die Auswerteeinheit 5 welche hier eine eigenständige Einheit ist, berechnet dann aus den mechanischen Schwingungen, d.h. insbesondere aus der Frequenz und den beiden Messgrößen Temperatur und Druck die Dichte.

**Bezugszeichenliste**

| 1 | Medium |
|---|---|
| 2 | Mechanisch schwingfähige Einheit |
| 3 | Anrege-/Empfangseinheit |
| 4 | Elektronikeinheit |
| 4.1 | Eingang der Elektronikeinheit |
| 4.2 | Ausgang der Elektronikeinheit |
| 5 | Auswerteeinheit |
| 6 | Temperatursensor |
| 7 | Drucksensor |
| 8 | Speichereinheit |
| 10 | Behälter |

**Patentansprüche**

1. Vorrichtung zur Bestimmung und/oder Überwachung mindestens einer Prozessgröße, insbesondere der Dichte (p) eines Mediums (1),
   mit mindestens einer mechanisch schwingfähigen Einheit (2),
   mit mindestens einer Anrege-/Empfangseinheit (3), welche die mechanisch schwingfähige Einheit (2) zu mechanischen Schwingungen anregt und welche die mechanischen Schwingungen der mechanisch schwingfähigen Einheit (2) empfängt,
   und
   mit mindestens einer Elektronikeinheit (4), welche die Artrege/Empfangseinheit (3) mit einem elektrischen Anregesignal ($S_A$) beaufschlagt,
   und welche von der Anrege-/Empfangseinheit (3) ein elektrisches Empfangssignal ($S_E$) erhält,
   **dadurch gekennzeichnet,**
   **dass** die Elektronikeinheit (4) derartig ausgestaltet ist, dass die Elektronikeinheit (4) das Anregesignal ($S_A$) derartig erzeugt, dass sich zwischen dem Empfangssignal ($S_E$) und dem Anregesignal ($S_A$) eine Phasendifferenz ($\Delta\phi$) ergibt, welche im Wesentlichen gleich einem vorgegebenen Phasendifferenzsollwert ($\Delta\phi_{soll}$) ist,
   **dass** der Phasendifferenzsollwert ($\Delta\phi_{soll}$) derartig vorgegeben ist, dass bei dem Phasendifferenzsollwert ($\Delta\phi_{soll}$) Auswirkungen von Änderungen der Viskosität des Mediums (1) auf die mechanischen Schwingungen der mechanisch schwingfähigen Einheit (2) im Wesentlichen vernachlässigbar sind,
   **dass** die Eingangsimpedanz der Elektronikeinheit (4) um mindestens eine Größenordnung, größer als die Impedanz der Anrege-/Empfangseinheit (3) ist, oder dass die Eingangsimpedanz der Elektronikeinheit (4) um mindestens eine Größenordnung, kleiner als die Impedanz der Anrege-/Empfangseinheit (3) ist, und dass der Betrag des Phasendifferenzsollwerts ($\Delta\phi_{soll}$) zwischen 40° und 50° beträgt,

wobei die Eingangsimpedanz sich auf den Eingang (4,1) bezieht, über welchen die Elektronikeinheit (4) das Empfangssignal ($S_E$) empfängt.

2. Vorrichtung nach Anspruch 1,
   **dadurch gekennzeichnet,**
   **dass** die Eingangsimpedanz der Elektronikeinheit (4)um mindestens eine Größenordnung größer als die Impedanz der Anrege-/Empfangseinheit (3) ist, und der Phasendifferenzsollwert ($\Delta\phi_{soll}$) -42° beträgt.

3. Vorrichtung nach Anspruch 1,
   **dadurch gekennzeichnet,**
   **dass** die Eingangsimpedanz der Elektronikeinheit (4)um mindestens eine Größenordnung kleiner als die Impedanz der Anrege-/Empfangseinheit (3) ist, und der Phasendifferenzsollwert ($\Delta\phi_{soll}$) +48° beträgt.

4. Vorrichtung nach Anspruch 1,
   **dadurch gekennzeichnet,**
   **dass** die Elektronikeinheit (4) derartig ausgestaltet ist, dass die Elektronikeinheit (4) das Anregesignal ($S_A$) derartig erzeugt, dass das Anregesignal ($S_A$) im Wesentlichen ein Sinus-Signal ist.

5. Vorrichtung nach Anspruch 1,
   **dadurch gekennzeichnet,**
   **dass** die Auswerteeinheit (5) derartig ausgestaltet ist, dass die Auswerteeinheit (5) die Dichte (p) des Mediums (1) im Wesentlichen nach folgender Formel bestimmt:

$$\rho = \frac{1}{K} * \left[ \left( \frac{F_{0,Vak} + C * T}{F_{0,Med}} \right)^2 * (1 + D * P) - 1 \right],$$

wobei K ein Koeffizient für die Dichteempfindlichkeit der mechanisch schwingfähigen Einheit (2) ist,
wobei $F_{0,Vak}$ die Frequenz der mechanischen Schwingungen der mechanisch schwingfähigen Einheit (2) im Vakuum ist,
wobei C ein Koeffizient für die Temperaturempfindlichkeit der mechanisch schwingfähigen Einheit (2) ist,
wobei T ein Temperaturwert für das Medium (1) ist,
wobei $F_{0,Med}$ die Frequenz ($F_0$) der mechanischen Schwingungen der mechanisch schwingfähigen Einheit (2) im Medium (1) ist,
wobei D ein Koeffizient für die Druckempfindlichkeit der mechanisch schwingfähigen Einheit (2) ist,
und
wobei P ein Druckwert für das Medium (1) ist.

6. Vorrichtung nach Anspruch 1,
   **dadurch gekennzeichnet,**
   **dass** mindestens ein Temperatursensor (6) zur Bestimmung der Temperatur (T) des Mediums (1) vorgesehen ist, und/oder
   **dass** mindestens ein Drucksensor (7) zur Bestimmung des Druckes (P) des Mediums (1) vorgesehen ist.

**Claims**

1. Unit for determining and/or monitoring at least one process variable, particularly the density (p) of a medium (1) with at least one unit (2) capable of oscillating mechanically, with at least one stimulator/receptor unit (3) which causes the unit (2), which is capable of oscillating mechanically, to oscillate and which receives the mechanical oscillations of the unit (2) capable of oscillating mechanically
   and
   with at least one electronics unit (4) which exposes the stimulator/receptor unit (3) to an electrical stimulation signal ($S_A$), and which receives an electrical reception signal ($S_E$) from the stimulator/receptor unit (3)

**characterized in that**

the electronics unit (4) is designed in such a way that the electronics unit (4) generates the stimulation signal ($S_A$) in such a way that a phase difference ($\Delta\phi$) occurs between the reception signal ($S_E$) and the stimulation signal ($S_A$), said phase difference being primarily equal to a predefined phase difference set point ($\Delta\phi_{set}$)

the phase difference set point ($\Delta\phi_{set}$) is predefined in such a way that the effect of changes in the viscosity of the medium (1) on the mechanical oscillations of the unit (2) capable of oscillating mechanically are primarily negligible with the phase difference set point ($\Delta\phi_{set}$) and **characterized in that** the phase difference set point ($\Delta\phi_{set}$) is between 40° and 50° when the input impedance of the electronics unit (4) is at least one dimension larger than the impedance of the stimulator/receptor unit (3), or when the input impedance of the electronics unit (4) is at least one dimension smaller than the impedance of the stimulator/receptor unit (3),

where the input impedance refers to the input (4.1) via which the electronics unit (4) receives the reception signal ($S_E$).

2. Unit as per Claim 1,
**characterized in that**
the input impedance of the electronics unit (4) is at least one dimension larger than the impedance of the stimulator/receptor unit (3), and the phase difference set point ($\Delta\phi_{set}$) is -42°.

3. Unit as per Claim 1,
**characterized in that**
the input impedance of the electronics unit (4) is at least one dimension smaller than the impedance of the stimulator/receptor unit (3), and the phase difference set point ($\Delta\phi_{set}$) is +48°.

4. Unit as per Claim 1,
**characterized in that**
the electronics unit (4) is designed in such a way that the electronics unit (4) generates the stimulation signal ($S_A$) in such a way that the stimulation signal ($S_A$) is primarily a sine signal.

5. Unit as per Claim 1,
**characterized in that**
the evaluation unit (5) is designed in such a way that the evaluation unit (5) determines the density (p) of the medium (1) primarily using the following formula:

$$p = \frac{1}{K} * \left[ \left( \frac{F_{0Vac} + C * T}{F_{0Med}} \right)^2 * \left( 1 + D * P \right) - 1 \right]$$

where K is a coefficient for the density sensitivity of the unit (2) capable of oscillating mechanically
where $F_{0,Vac}$ is the frequency of the mechanical oscillations of the unit (2) capable of oscillating mechanically in the vacuum
where C is a coefficient for the temperature sensitivity of the unit (2) capable of oscillating mechanically
where T is a temperature value for the medium (1)
where $F_{0,Med}$ is the frequency ($F_0$) the mechanical oscillations of the unit (2) capable of oscillating mechanically in the medium (1)
where D is a coefficient for the pressure sensitivity of the unit (2) capable of oscillating mechanically
and
where P is a pressure value for the medium (1).

6. Unit as per Claim 1
**characterized in that**
at least one temperature sensor (6) is provided to determine the temperature (T) of the medium (1)
and/or
at least one pressure sensor (7) is provided to determine the pressure (P) of the medium (1).

**Revendications**

1. Dispositif destiné à la détermination et/ou à la surveillance d'au moins une grandeur process, notamment de la densité (p) d'un produit (1),

   avec au moins une unité mécanique apte à vibrer (2),

   avec au moins une unité d'excitation / de réception (3), laquelle excite l'unité mécanique apte à vibrer (2) en vibrations mécaniques et laquelle reçoit les vibrations mécaniques de l'unité mécanique apte à vibrer (2),

   et

   avec au moins une unité électronique (4), laquelle alimente l'unité d'excitation / de réception (3) avec un signal d'excitation électrique ($S_A$), et laquelle reçoit de l'unité d'excitation / de réception (3) un signal de réception électrique ($S_E$),

   **caractérisé en ce**

   **que** l'unité électronique (4) est conçue de telle manière que l'unité électronique (4) génère le signal d'excitation ($S_A$) de façon qu'il en résulte, entre le signal de réception ($S_E$) et le signal d'excitation ($S_A$), une différence de phase ($\Delta\phi$) qui est pour l'essentiel égale à une consigne de différence de phase ($\Delta\phi_{cons}$) prédéfinie,

   **que** la consigne de différence de phase ($\Delta\phi_{cons}$) est prédéfinie de telle manière que, concernant la consigne de différence de phase ($\Delta\phi_{cons}$), les influences des changements de viscosité du produit (1) sur les vibrations mécaniques de l'unité mécanique apte à vibrer (2) sont pour l'essentiel négligeables,

   et en ce que la valeur de la consigne de différence de phase ($\Delta\phi_{cons}$), lorsque l'impédance d'entrée de l'unité électronique (4) est supérieure d'au moins un ordre de grandeur à l'impédance de l'unité d'excitation / de réception (3), ou lorsque l'impédance d'entrée de l'unité électronique (4) est inférieure d'au moins un ordre de grandeur à l'impédance de l'unité d'excitation / de réception (3), est comprise entre 40° et 50°, l'impédance d'entrée se rapportant à l'entrée (4.1), par le biais de laquelle l'unité électronique (4) reçoit le signal de réception ($S_E$).

2. Dispositif selon la revendication 1,
   **caractérisé en ce**
   **que** l'impédance d'entrée de l'unité électronique (4) est supérieure d'au moins un ordre de grandeur à l'impédance de l'unité d'excitation / de réception (3), et que la consigne de différence de phase ($\Delta\phi_{cons}$) est de -42°.

3. Dispositif selon la revendication 1,
   **caractérisé en ce**
   **que** l'impédance d'entrée de l'unité électronique (4) est inférieure d'au moins un ordre de grandeur à l'impédance de l'unité d'excitation / de réception (3), et que la consigne de différence de phase ($\Delta\phi_{cons}$) est de +48°

4. Dispositif selon la revendication 1,
   **caractérisé en ce**
   **que** l'unité électronique (4) est conçue de telle manière que l'unité électronique (4) génère le signal d'excitation ($S_A$) de sorte que le signal d'excitation ($S_A$) soit pour l'essentiel un signal sinusoïdal.

5. Dispositif selon la revendication 1,
   **caractérisé en ce**
   **que** l'unité d'exploitation (5) est conçue de telle manière que l'unité d'exploitation détermine la densité (p) du produit (1) pour l'essentiel d'après la formule suivante:

$$p = \frac{1}{K} * \left[ \left( \frac{F_{OVac} + C * T}{F_{OMed}} \right)^2 * \left( 1 + D * P \right) - 1 \right]$$

où K est un coefficient pour la sensibilité à la densité de l'unité mécanique apte à vibrer (2),
où $F_{0,vak}$ est la fréquence des vibrations mécaniques de l'unité mécanique apte à vibrer (2) dans le vide,
où C est un coefficient pour la sensibilité à la température de l'unité mécanique apte à vibrer (2),
où T est une valeur de température pour le produit (1),
où $F_{0,Med}$ est la fréquence des vibrations mécaniques de l'unité mécanique apte à vibrer (2) dans le produit (1),
où D est un coefficient pour la sensibilité à la pression de l'unité mécanique apte à vibrer (2) et
où P est une valeur de pression pour le produit (1).

**6.** Dispositif selon la revendication 1,
**caractérisé en ce**
**qu'**est prévu au moins un capteur de température (6) destiné à la détermination de la température (T) du produit (1); et/ou
en ce qu'est prévu au moins un capteur de pression (7) destiné à la détermination de la pression (P) du produit (1).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10057974 A1

- EP 0985916 A1